# FASCICULE DE BREVET EUROPEEN

(11) **EP 3 308 093 B1**
(45) Date de publication et mention de la délivrance du brevet: **13.11.2019**
(21) Numéro de dépôt: 16732527.3
(22) Date de dépôt: 10.06.2016
(51) Int. Cl.: F28F 1/32

(54) **AILETTE D'UN ÉCHANGEUR THERMIQUE NOTAMMENT POUR VÉHICULE AUTOMOBILE, ET ÉCHANGEUR THERMIQUE CORRESPONDANT**
RIPPE EINES WÄRMETAUSCHERS, INSBESONDERE FÜR EIN KRAFTFAHRZEUG, UND ZUGEHÖRIGER WÄRMETAUSCHER
FIN OF A HEAT EXCHANGER, NOTABLY FOR A MOTOR VEHICLE, AND CORRESPONDING HEAT EXCHANGER

(30) Priorité: 12.06.2015 FR 1555343
(43) Date de publication de la demande: 18.04.2018
(73) Titulaire: Valeo Systemes Thermiques, 78320 Le Mesnil Saint Denis (FR)
(72) Inventeur: ETIENNE, Erwan, 53000 Laval (FR); BOISSELLE, Patrick, 53000 Laval (FR); BRY, Samuel, 53260 Parne sur Roc (FR); BERTHOME, Jean-Philippe, 53950 Louverne (FR)
(74) Mandataire: Tran, Chi-Hai
(86) Numéro de dépôt international: PCT/EP2016/063392
(87) Numéro de publication internationale: WO 2016/198664

(56) Documents cités:
- EP-A1- 1 890 101
- WO-A1-2013/161239
- DE-A1-102012 002 234

## Description

L'invention est du domaine des échangeurs thermique pour véhicule automobile et porte plus spécifiquement sur une ailette pour un tel échangeur thermique. Une ailette selon le préambule de la revendication 1 est connue par exemple du document DE 10 2012 002 234.

On connaît aujourd'hui des échangeurs thermiques pour véhicules automobiles comprenant notamment un faisceau de tubes disposés parallèlement sur une ou plusieurs rangées, ces tubes étant destinés à la circulation à travers l'échangeur thermique d'un fluide caloporteur. Il s'agit en particulier de tubes dits « plats » adaptés pour être agencés dans un échangeur thermique dont l'encombrement est réduit.

La fonction d'un tel échangeur thermique est de permettre un échange thermique entre le fluide caloporteur en circulation à l'intérieur de la ou des rangées de tubes alignés et un fluide extérieur, tel qu'un flux d'air, traversant la ou les rangées de tubes, par exemple transversalement par rapport à l'axe longitudinal des tubes.

Afin d'augmenter les échanges thermiques entre les fluides, il est courant de munir les échangeurs thermiques d'une pluralité d'éléments d'échange thermique disposés entre les tubes. Les éléments d'échange thermique sont avantageusement des ailettes parallèles, chacune étant perforée d'au moins un orifice, avantageusement d'une pluralité d'orifices destinés à recevoir les tubes de l'échangeur thermique. Ces orifices sont disposés le long d'une ou plusieurs rangées, selon que le faisceau de tubes comprend une ou plusieurs rangées de tubes, par exemple parallèlement à une direction longitudinale, correspondant à la grande dimension de l'ailette.

Les tubes et les orifices des ailettes peuvent être de forme oblongue. On connaît déjà du document FR 2 722 563 un échangeur thermique comprenant une pluralité d'ailettes et de tubes, les tubes présentant respectivement, avant d'être mis en forme dans l'échangeur thermique, une section transversale de forme oblongue sensiblement homologue à celle d'un orifice d'une ailette. En particulier, un tube comporte deux flancs longitudinaux en regard l'un de l'autre qui sont incurvés et présentent chacun au moins une portion concave (c'est-à-dire une portion ayant une convexité tournée vers l'intérieur du tube), de sorte que le tube présente notamment une largeur extérieure restreinte dans une région où ses flancs longitudinaux sont les plus proches l'un de l'autre.

Chaque orifice d'une ailette est de plus bordé sur tout son pourtour par un collet.

Par la suite, le maintien de l'ensemble formé par une ailette et les tubes qui la traversent, est réalisé mécaniquement en déformant les parois des tubes, notamment par expansion des tubes, de manière à plaquer les tubes à force contre les collets autour des orifices ménagés dans les ailettes.

Toujours pour améliorer les échanges thermiques, il est connu de dévier ou de perturber le flux du fluide extérieur passant entre les ailettes. Pour ce faire, les ailettes peuvent être pourvues de déflecteurs à persiennes notamment, disposés entre deux orifices successifs d'une même rangée.

Toutefois lors de la mise en forme des tubes dans l'échangeur thermique, les déformations de chaque tube sont transmises aux persiennes. Les persiennes peuvent donc être déformées à leur tour ce qui dégrade la performance de l'échangeur thermique. La mise en forme des tubes dans l'échangeur thermique est donc limitée par le risque de déformation des persiennes.

Ainsi dans les solutions de l'art antérieur, on prévoit pour chaque orifice un collet le bordant avec un rayon de courbure constant et qui est relativement faible, à savoir de l'ordre de 0 à 0.05mm. Ceci conduit à un collet très rigide.

Toutefois, la rigidité du collet transmet les efforts d'expansion du tube aux persiennes, ce qui peut provoquer la déformation des persiennes après expansion, en particulier lorsque les tubes ont des dimensions maximales dans leurs tolérances. Par ailleurs, si on augmente le rayon de courbure du collet, le collet risque de se déformer.

L'invention a donc pour objectif de pallier au moins partiellement ces problèmes de l'art antérieur en proposant une ailette pour un échangeur thermique ayant une bonne résistance mécanique tout en réduisant le risque de transmission des efforts d'expansion du tube ou des tubes à l'ailette et aux éléments de l'ailette, tels que des persiennes.

À cet effet, l'invention a pour objet une ailette selon la revendication 1.

Chaque collet est par exemple réalisé par déformation du bord d'un orifice associé de l'ailette.

Le collet présente un rayon de courbure progressif, de sorte que le rayon de courbure du collet diffère le long du pourtour de l'orifice.

Ainsi, le rayon de courbure du collet est faible à certains endroits, ce qui assure une certaine rigidité et participe à la résistance mécanique de l'ailette. Au contraire sensiblement au milieu de la plus grande longueur de l'orifice, le rayon de courbure du collet est plus grand, de sorte que le collet est plus élastique et participe moins à la résistance mécanique de l'ailette.

Cette souplesse de conception, au milieu de l'orifice destiné à recevoir notamment une partie plus large d'un tube de l'échangeur thermique, permet, en particulier lorsque le tube présente une épaisseur supérieure à l'épaisseur nominale, de diminuer le risque de transmission des déformations du tube par exemple par expansion, à l'ailette, et notamment à des persiennes prévues sur l'ailette.

Ladite ailette peut en outre comporter une ou plusieurs des caractéristiques ci-après, prises séparément ou en combinaison.

Selon un aspect de l'invention, le rayon de courbure minimal est inférieur ou égal à 0.05mm et le rayon de courbure maximal est supérieur ou égal à 0.15mm.

De préférence, le rayon de courbure maximal du collet est de l'ordre de 0.22mm. Avantageusement, le rayon de courbure maximal du collet est inférieur à la hauteur du collet.

Selon un exemple de réalisation la hauteur du collet est de l'ordre de 0.3mm.

Cette configuration permet d'avoir au moins une zone du collet, à savoir le haut du collet, qui vient épouser la forme d'un tube traversant l'orifice.

Selon un autre aspect de l'invention, chaque orifice présente une forme de largeur variable, et le collet bordant un orifice associé présente un rayon de courbure minimal dans la ou les région(s) de l'orifice de plus petite largeur. Cette région ou chaque région de plus petite largeur, forme une région utile pour la résistance mécanique de l'ailette et nécessite un collet plus rigide à cet endroit.

Les deux bords longitudinaux d'un orifice peuvent être raccordés par deux parties d'extrémité de forme sensiblement circulaire, et le collet bordant un orifice associé présente un rayon de courbure minimal au niveau des deux parties d'extrémité.

Selon un autre aspect de l'invention, chaque orifice est plus large au milieu de la plus grande longueur de l'orifice que dans la région restante de l'orifice.

Le collet bordant un orifice associé présente donc un rayon de courbure maximal dans la région centrale de l'orifice de plus grande largeur. Cette région centrale est notamment destinée à recevoir une partie plus large et plus flexible du tube, et participe moins à la résistance mécanique de l'ensemble ailette et tube. Avec un collet moins rigide en cet endroit, les déformations du tube à l'assemblage ne sont pas transmises à l'ailette, et par exemple à des persiennes prévues sur l'ailette.

Selon un mode de réalisation, chaque bord longitudinal présente une portion concave, vu de l'intérieur de l'orifice, séparant les deux portions convexes et le collet bordant un orifice associé présente un rayon de courbure maximal au niveau de la portion concave de chaque bord longitudinal de l'orifice.

L'invention concerne également un échangeur thermique, notamment pour véhicule automobile, comprenant au moins un tube et au moins une ailette telle que définie précédemment destinée à être traversée par ledit au moins un tube.

Il s'agit en particulier d'un échangeur thermique à assemblage mécanique.

Ainsi, lors de l'assemblage mécanique, le tube est enfilé dans un orifice d'une ailette, voire dans plusieurs orifices alignés d'une pluralité d'ailettes, et est ensuite déformé notamment par expansion et vient se plaquer contre le collet de chaque orifice qu'il traverse. Le collet présente une rigidité en certains endroits, notamment au niveau des extrémités de l'orifice, permettant d'assurer la résistance mécanique de l'ensemble tube et ailette, tandis que ce collet présente une certaine souplesse dans la région centrale, et cette souplesse évite la transmission des efforts d'expansion du tube à l'ailette, et notamment à des persiennes qui peuvent être prévues sur l'ailette.

Ledit échangeur thermique peut en outre comporter une ou plusieurs caractéristiques suivantes, prises séparément ou en combinaison.

Selon un aspect de l'invention, ladite au moins une ailette présente au moins un orifice de forme complémentaire de la forme dudit au moins un tube et dont les dimensions sont supérieures aux dimensions de la section transversale du tube le traversant, de manière à pouvoir enfiler le tube dans l'orifice associé de l'ailette.

Avantageusement, le tube présente avant mise en forme notamment par expansion dans l'orifice, une forme sensiblement identique à la forme de l'orifice associé de l'ailette. Cette similarité des formes avant assemblage permet de diminuer notamment les efforts de striction lors de l'expansion du tube.

Selon un autre aspect de l'invention, le tube présente une section transversale de largeur variable, et le collet bordant un orifice associé de l'ailette présente un rayon de courbure minimal dans une zone de l'orifice recevant une partie moins large du tube et présente un rayon de courbure maximal dans une zone de l'orifice recevant une partie plus large du tube.

Ainsi, le rayon de courbure évolue progressivement depuis le rayon de courbure minimal là où le tube est le moins large, et notamment dans les régions d'extrémité du tube, afin d'assurer un bon serrage, jusqu'au rayon de courbure maximal là où le tube est plus large pour un assemblage plus élastique, de sorte que les déformations du tube à l'assemblage ne sont pas transmises à l'ailette et aux éléments qu'elle porte tels que des persiennes.

Selon un mode de réalisation :
- chaque tube présente une section transversale comportant deux flancs longitudinaux opposés, chaque flanc longitudinal présentant au moins deux portions concaves, vu de l'extérieur du tube,
- les portions convexes sont complémentaires des portions concaves du tube traversant l'orifice associé et

En particulier, dans les régions d'extrémité d'un tube traversant un orifice de l'ailette et où les flancs longitudinaux du tube sont les plus proches l'un de l'autre, le rayon de courbure est minimal de façon à assurer une bonne résistance mécanique de l'ailette et empêcher notamment les ailettes de glisser des tubes lors de tests de vibrations par exemple.

Selon un mode de réalisation particulier,
- chaque flanc longitudinal d'un tube présente une portion convexe, vu de l'extérieur du tube, séparant deux portions concaves,
- chaque bord longitudinal d'un orifice présente une portion concave, vu de l'intérieur de l'orifice, séparant deux portions convexes, et complémentaire de la portion convexe du tube traversant l'orifice, et
- le collet bordant un orifice associé présente un rayon de courbure maximal au niveau de la portion concave de chaque bord longitudinal de l'orifice.

En particulier, dans la région où les flancs longitudinaux d'un tube traversant un orifice de l'ailette, sont les plus éloignés l'un de l'autre, le tube est plus flexible et le rayon de courbure du collet est maximal de manière à conférer une certaine souplesse au collet, réduisant le risque de transmission de déformations du tube à l'ailette.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 est une vue générale schématique d'un échangeur thermique comportant des ailettes et des tubes traversant les ailettes,
- la figure 2 est une vue en coupe d'un tube de l'échangeur thermique de la figure 1 selon un exemple de réalisation,
- la figure 3 est une vue d'une portion d'une ailette de l'échangeur thermique de la figure 1 destinée à recevoir une rangée de tubes de la figure 2,
- la figure 4 est une vue partielle en coupe sensiblement au milieu d'un tube traversant une pluralité d'ailettes parallèles de l'échangeur thermique de la figure 1,
- la figure 5 est une vue d'un collet entourant un orifice de l'ailette de la figure 3,
- la figure 6 est une vue en coupe suivant l'axe I-I de la figure 5, et
- la figure 7 est une vue en coupe suivant l'axe II-II de la figure 5.

Sur ces figures, les éléments identiques portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

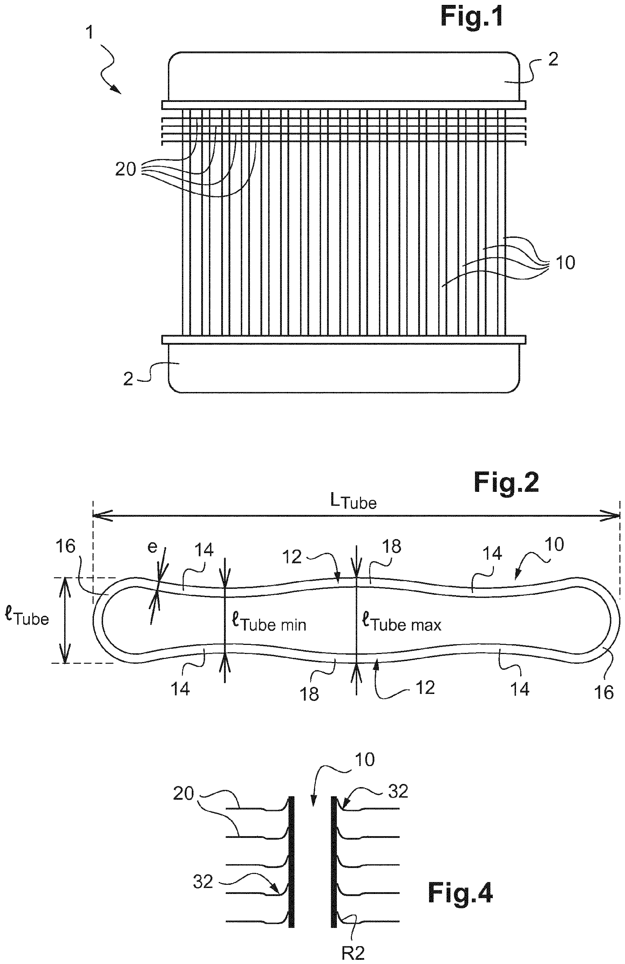

L'invention est du domaine d'un échangeur thermique 1, notamment pour véhicule automobile tel qu'illustré schématiquement sur la figure 1.

Il s'agit en particulier d'un échangeur thermique 1 dit à assemblage mécanique, c'est-à-dire dont les éléments sont reliés entre eux par assemblage mécanique uniquement, par exemple par coopération de forme puis déformation, par opposition à un échangeur brasé qui induit une action thermique sur l'échangeur thermique 1.

L'échangeur thermique de la figure 1 comprend de manière connue, deux boîtes collectrices 2 mises en communication par l'intermédiaire d'une série de tubes 10 dans lesquels circule un fluide caloporteur. Les tubes 10 sont disposés de façon sensiblement parallèle. Les tubes 10 sont, dans le cas décrit ici, des tubes plats, mais pourraient également être des tubes de section circulaire, ovale ou de toute autre forme connue de l'homme du métier. L'échangeur thermique 1 comprend en outre des ailettes 20 agencées de manière parallèle, entre les boîtes collectrices 2 de façon sensiblement transversale à l'axe longitudinal des tubes 10. Un échange thermique entre le fluide caloporteur circulant à l'intérieur des tubes 10, et un fluide extérieur tel qu'un flux d'air est réalisé, d'une part, par conduction entre les ailettes 20 et les tubes 10, et d'autre part, par convection du flux d'air circulant entre les ailettes 20.

En référence à la figure 2, on a représenté un exemple de réalisation d'un tube 10 avant sa mise en forme par déformation.

Le tube 10 est avantageusement fabriqué à partir d'un alliage métallique adapté pour être déformé facilement.

Selon l'exemple de réalisation illustré, le tube 10 présente une section transversale de forme sensiblement oblongue comportant deux flancs longitudinaux 12 en regard l'un de l'autre. Les deux flancs longitudinaux 12 sont raccordés l'un à l'autre par deux parties d'extrémité 16 de forme sensiblement circulaire. Les deux flancs longitudinaux 12 et les deux parties d'extrémité 16 sont formés par une paroi du tube 10 d'épaisseur e sensiblement constante.

Selon la section transversale, le tube 10 présente une longueur L_{Tube} désignant la plus grande distance séparant les deux parties d'extrémité 16 de forme sensiblement circulaire, à l'extérieur du tube 10 et une largeur l_{Tube} désignant la plus petite distance entre les deux flancs longitudinaux 12 du tube, à l'extérieur du tube 10.

De plus, dans cet exemple, le tube 10 présente une section transversale de largeur l_{Tube} variable entre une largeur minimale l_{Tube min} et une largeur maximale l_{Tube max}.

Plus précisément selon cet exemple, chaque flanc longitudinal 12 présente au moins deux portions concaves 14, vu de l'extérieur du tube 10. On entend par portion concave 14 d'un flanc longitudinal 12 du tube 10, une portion ayant une convexité tournée vers l'intérieur du tube 10. En d'autres termes, vu de l'extérieur du tube 10, le tube 10 comporte deux formes en creux 14 sensiblement courbées.

En outre, une portion convexe 18 peut être agencée entre les deux portions concaves 14 de chaque flanc longitudinal 12, vu de l'extérieur du tube 10. On entend par portion convexe 18 d'un flanc longitudinal 12 du tube 10, une portion ayant une convexité tournée vers l'extérieur du tube 10. Ainsi, observé depuis l'extérieur du tube 10, chaque flanc longitudinal 12 du tube 10 présente une partie en relief 18 agencée entre les deux formes en creux 14.

Les portions concaves 14 sont ici prévues aux deux extrémités de chaque flanc longitudinal 12 du tube 10, tandis que la portion convexe 18 les séparant est ici agencée sensiblement au milieu du flanc longitudinal 12.

Ainsi selon cet exemple, le tube 10 est moins large dans les zones où les deux flancs longitudinaux 12 en regard sont les plus proches l'un de l'autre, à savoir au niveau de deux portions concaves 14 en vis-à-vis. Le tube 10 est plus large dans la zone où les deux flancs longitudinaux 12 en regard sont les plus éloignés l'un de l'autre, à savoir dans cet exemple, au niveau de deux portions convexes 18 en vis-à-vis. Autrement dit, la largeur extérieure l_{Tube} du tube 10 est plus petite au niveau des portions concaves 14 en vis-à-vis qu'au niveau des portions convexes 18 en vis-à-vis.

Il en résulte que le tube 10 présente ici une forme particulière qui permet d'éviter un retour élastique des flancs longitudinaux 12 du tube 10 après sa mise en forme.

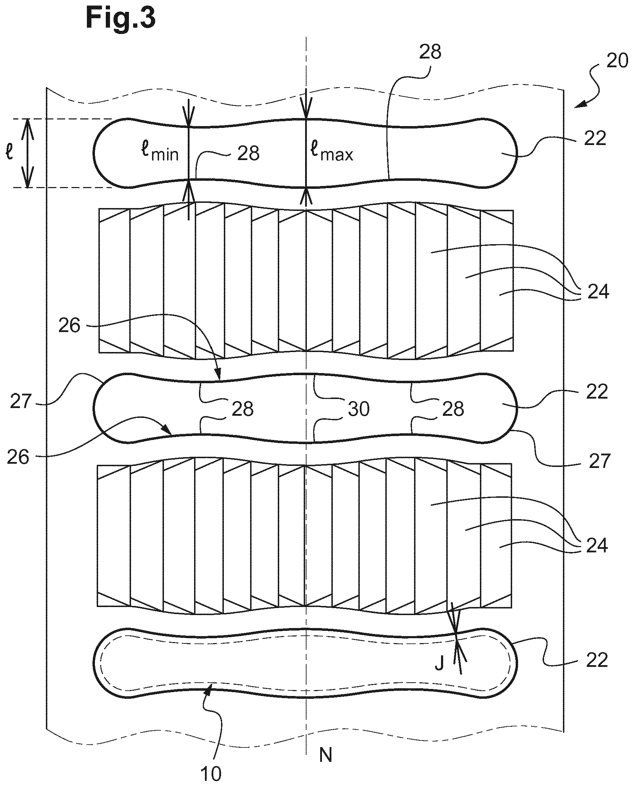

La figure 3 représente une portion d'une des ailettes 20 de la figure 1. L'ailette 20 se présente sous la forme d'une bande de tôle de faible épaisseur également appelée feuillard, par exemple en alliage d'aluminium, dans laquelle est perforée une pluralité d'orifices 22. Les orifices 22 d'une ailette 20 peuvent être séparés deux à deux par des déflecteurs, ici réalisés sous forme de rangées de persiennes 24, dont la fonction est d'augmenter l'échange thermique des ailettes 20 en déviant et/ou perturbant le flux d'un fluide extérieur, qui traverse l'échangeur thermique 1.

L'ailette 20 présente dans cet exemple une forme générale sensiblement rectangulaire.

Les persiennes 24 sont, dans cet exemple, disposées alignées suivant la largeur de l'ailette 20 entre deux orifices 22 d'une rangée donnée. Les persiennes 24 sont par exemple réalisées de manière à faire saillie obliquement de la surface de l'ailette 20.

Les orifices 22 sont, quant à eux, disposés selon une rangée d'axe N. L'axe N est par exemple sensiblement parallèle à la direction de la longueur de l'ailette 20.

Les orifices 22 permettent le passage des tubes 10 qui traversent l'ailette 20. Les orifices 22 sont donc de forme adaptée à la section des tubes 10.

Dans le cas de tubes plats 10, les orifices 22 sont avantageusement de forme longitudinale.

Plus précisément, dans le cas de tubes 10 de section transversale à largeur l_{Tube} variable, chaque orifice 22 présente une forme sensiblement longitudinale, de largeur l variable entre une largeur minimale lₘᵢₙ et une largeur maximale lₘₐₓ.

Chaque orifice 22 présente selon le mode de réalisation illustré deux régions, ici d'extrémité, de plus petite largeur lₘᵢₙ et une région sensiblement centrale selon l'axe longitudinal de l'orifice 22 qui présente une plus grande largeur lₘₐₓ.

Plus précisément de façon complémentaire à la forme d'un tube 10 tel que décrit en référence à l'exemple de la figure 2, chaque orifice 22 (cf. figure 3) présente une section transversale de forme sensiblement oblongue comportant deux bords longitudinaux 26 en regard l'un de l'autre. Les deux bords longitudinaux 26 sont raccordés par deux parties d'extrémité 27 de forme sensiblement circulaire. En outre, selon l'exemple de réalisation illustré, chaque bord longitudinal 26 d'un orifice 22 présente au moins deux portions convexes 28, vu de l'intérieur de l'orifice 22. On entend par portion convexe 28 d'un bord longitudinal 26 d'un orifice 22 de l'ailette 20, une portion ayant une convexité tournée vers l'intérieur de l'orifice 22. Les portions convexes 28 d'un bord longitudinal 26 d'un orifice 22 sont complémentaires des portions concaves 14 d'un tube 10 associé destiné à traverser cet orifice 22.

Dans cet exemple, les deux portions convexes 28 d'un bord longitudinal 26 de l'orifice 22 sont séparées par une portion concave 30, vu de l'intérieur de l'orifice 22 de l'ailette 20. On entend par portion concave 30 d'un bord longitudinal 26 d'un orifice 22 de l'ailette 20, une portion ayant une convexité tournée vers l'extérieur de l'orifice 22. Ainsi, vu de l'intérieur de l'orifice 22, chaque bord longitudinal 26 présente un creux 30 et deux parties en relief 28. Chaque portion concave 30 d'un orifice 22 est complémentaire d'une portion convexe 18 d'un tube 10 associé destiné à traverser cet orifice 22.

Les portions convexes 28 sont ici prévues aux deux extrémités de chaque bord longitudinal 26 de l'orifice 22, tandis que la portion concave 30 les séparant est ici agencée sensiblement au milieu du bord longitudinal 26.

Ainsi selon cet exemple, l'orifice 22 est moins large dans les zones où les deux bords longitudinaux 26 en regard sont les plus proches l'un de l'autre, à savoir au niveau de deux portions convexes 28 en vis-à-vis. L'orifice 22 est plus large dans la zone où les deux bords longitudinaux 26 en regard sont les plus éloignés l'un de l'autre, à savoir dans cet exemple, au niveau de deux portions concaves 30 en vis-à-vis.

Bien sûr, on peut prévoir toute autre forme de l'orifice 22 du moment que cette forme est adaptée pour le passage d'un tube 10 associé de l'échangeur thermique 1.

Chaque orifice 22 d'une ailette 20 a donc une forme sensiblement identique à celle d'un tube 10 avant mise en forme du tube 10, et la forme de chaque orifice 22 est de dimension supérieure à celle de la section d'un tube 10 complémentaire afin de permettre d'enfiler le tube 10 à l'intérieur de l'orifice 22. Un tube 10 reçu dans un orifice 22 de l'ailette 20 est schématisé par des tirets sur la figure 3.

Plus précisément, chaque orifice 22 est configuré pour accueillir un tube 10 tel que décrit précédemment de sorte qu'un ensemble formé par un orifice 22 muni d'un tube 10 présente un jeu J entre le tube 10 et l'orifice 22 de réception qui lui correspond. Le jeu J est avantageusement présent entre le tube 10 et l'orifice 22, autour de toute la périphérie du tube 10. Ainsi, lors de l'assemblage on positionne le tube 10 dans un orifice 22 d'au moins une ailette 20, de sorte que l'on place le tube 10 en formant un jeu J entre le tube 10 et l'orifice 22. Ensuite, le tube 10 peut être déformé par exemple par expansion de ses parois à l'intérieur de l'orifice 22 de l'ailette 20.

Par ailleurs, chaque tube 10 peut être destiné à être enfilé au travers d'orifices 22 alignés d'une pluralité d'ailettes 10 disposées parallèlement entre elles comme schématisé sur la figure 4.

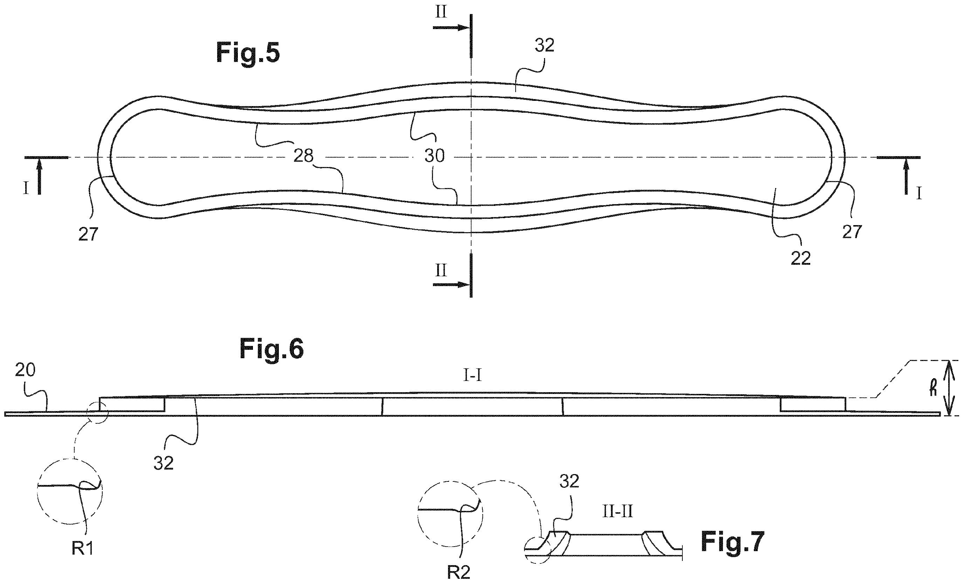

Chaque orifice 22 est de plus bordé, par un collet 32, représenté de façon schématique sur la figure 5. Le collet 32 est avantageusement prévu sur tout le pourtour de l'orifice 22 et venu de matière avec l'ailette 20.

Chaque collet 32 peut être réalisé par déformation du bord de l'orifice 22 associé. Les collets 32 sont par exemple formés par emboutissage. Il en résulte que le collet 32 présente une portion relevée par rapport au plan général de l'ailette 20 qui fait donc saillie par rapport au plan général de l'ailette 20, cette portion en saillie est nommée par la suite le haut du collet 32. Cette portion en saillie peut s'étendre sensiblement perpendiculairement par rapport au plan général défini par l'ailette 20.

Chaque collet 32 présente une forme générale sensiblement complémentaire de la forme de l'orifice 22 associé.

En outre, chaque collet 32 est réalisé avec une forme sensiblement incurvée par rapport au plan général défini par l'ailette 20. Autrement dit, chaque collet 32 présente un rayon de courbure R1, R2 entre le plan général défini par l'ailette 20 et le haut du collet 32. En particulier, le rayon de courbure du collet 32 est minimal R1, voire nul, au niveau des extrémités de l'orifice 22 associé et maximal R2 dans une région sensiblement centrale de l'orifice 22 associé dans le sens de la longueur.

Le collet 32 présente donc un rayon de courbure progressif. Autrement dit, le rayon de courbure du collet 32 n'est pas le même le long du pourtour de l'orifice 22.

Plus précisément, le rayon de courbure minimal R1 (figure 6) est par exemple de l'ordre de 0 à 0.05mm et le rayon de courbure maximal R2 (figure 7) est par exemple supérieur ou égal à 0.15mm.

Selon un mode de réalisation particulier, le rayon de courbure maximal R2 est de préférence de l'ordre de 0.22mm.

Ainsi, une fois un tube 10 assemblé dans un orifice 22 associé et mis en forme, la paroi du tube 10 vient s'appliquer étroitement contre le collet 32 bordant l'orifice 22, pour assurer l'assemblage du tube 10 avec l'ailette 20 et en même temps une bonne liaison thermique entre eux. Plus précisément, au moins une zone du collet 32, ici le haut du collet 32 en se référant à la figure 4, vient épouser la forme du tube 10, après assemblage de ce dernier dans l'orifice 22 associé.

Avantageusement, le rayon maximal R2 du collet 32 est inférieur à la hauteur h du collet 32, afin de permettre qu'une zone au moins du collet 32 soit sensiblement perpendiculaire au tube 10 et vienne épouser la forme du tube 10. Selon le mode de réalisation particulier illustré, la hauteur h du collet 32 est de l'ordre de 0.3mm.

En particulier, en référence aux figures 5 et 6, un collet 32 bordant un orifice 22 associé présente un rayon de courbure minimal R1 dans la région de l'orifice 22 de plus petite largeur lₘᵢₙ, à savoir où les deux bords longitudinaux 26 sont les plus proches l'un de l'autre. Autrement dit, selon le mode de réalisation particulier de l'orifice 22 dont chaque bord longitudinal 26 présente au moins deux portions convexes 28, chaque collet 32 bordant un orifice 22 associé présente un rayon de courbure minimal R1 au niveau des portions convexes 28 de chaque bord longitudinal 26 de l'orifice 22.

De plus, le collet 32 présente également selon cet exemple un rayon de courbure minimal R1 au niveau des deux parties d'extrémité 27 de l'orifice 22 reliant les deux bords longitudinaux 26.

D'un autre côté, en référence aux figures 5 et 7, le collet 32 présente un rayon de courbure maximal R2, supérieur au rayon de courbure minimal R1, dans la région de l'orifice 22 où les deux bords longitudinaux 26 sont les plus éloignés l'un de l'autre. Autrement dit, selon le mode de réalisation particulier de l'orifice 22 dont chaque bord longitudinal 26 présente au moins deux portions convexes 28 séparées par une portion concave 30, chaque collet 32 bordant un orifice 22 associé présente un rayon de courbure maximal R2 au niveau de la portion concave 30 de chaque bord longitudinal 26 de l'orifice 22.

Ainsi, à l'assemblage du tube 10 dans un orifice 22 associé de l'ailette 20, le rayon de courbure du collet 32 est plus petit (rayon de courbure minimal R1) dans une zone de l'orifice recevant les extrémités du tube 10 et une partie moins large du tube 10, et le rayon de courbure est plus grand (rayon de courbure maximal R2), sensiblement dans la région centrale de l'orifice 22 dans le sens de la longueur, cette région centrale recevant une partie plus large du tube 10.

Une ailette 20 présentant un ou plusieurs orifices 22, chacun bordé par un collet 32 selon l'invention, épousant la forme du tube 10 après assemblage par expansion dans un orifice 22, présente donc, une bonne résistance mécanique conférée par la rigidité du collet 32 dans les régions d'extrémité avec un faible rayon de courbure R1, sans que les efforts d'expansion du tube 10 ne soient transmis au niveau de l'ailette 20 ou notamment de persiennes 24 prévues sur l'ailette 20, du fait de de la souplesse du collet 32 conférée par un plus grand rayon de courbure R2 notamment dans une région centrale de l'orifice.

## Revendications

1. Ailette (20), d'un échangeur thermique (1) notamment pour véhicule automobile, comportant au moins un orifice (22) de forme sensiblement longitudinale, destiné à être traversé par un tube (10) de l'échangeur thermique, ledit au moins un orifice (22) étant bordé d'un collet (32) venu de matière avec l'ailette (20),
**caractérisée en ce que** :
- le collet (32) est réalisé avec une forme sensiblement incurvée par rapport au plan général défini par l'ailette (20), de manière à présenter un rayon de courbure (R1, R2) entre le plan général défini par l'ailette (20) et le haut du collet (32) en saillie par rapport au plan général défini par l'ailette (20), et **en ce que**
- le rayon de courbure du collet (32) est minimal (R1) au niveau des extrémités de l'orifice (22) associé et maximal (R2) dans une région sensiblement centrale selon l'axe longitudinal de l'orifice (22) associé ;
- chaque orifice (22) présente une forme sensiblement oblongue, comportant deux bords longitudinaux (26) opposés, chaque bord longitudinal (26) présentant au moins deux portions convexes (28), vu de l'intérieur de l'orifice (22), et dans laquelle
- le collet (32) bordant un orifice (22) associé présente un rayon de courbure minimal (R1) au niveau des portions convexes (28) de chaque bord longitudinal (26) de l'orifice (22).

2. Ailette (20) selon la revendication précédente, dans laquelle le rayon de courbure minimal (R1) est inférieur ou égal à 0.05mm et le rayon de courbure maximal (R2) est supérieur ou égal à 0.15mm, de préférence de l'ordre de 0.22mm.

3. Ailette (20) selon la revendication précédente, dans laquelle le rayon maximal (R2) du collet (32) est inférieur à la hauteur (h) du collet (32), par exemple de l'ordre de 0.3mm.

4. Ailette (20) selon l'une quelconque des revendications précédentes, dans laquelle :
- chaque orifice (22) présente une forme de largeur (l) variable, et
- le collet (32) bordant un orifice (22) associé présente un rayon de courbure minimal (R1) dans au moins une région de l'orifice (22) de plus petite largeur (lₘᵢₙ).

5. Ailette (20) selon l'une quelconque des revendications précédentes, dans laquelle chaque orifice (22) est plus large (lₘₐₓ) sensiblement au milieu de la plus grande longueur de l'orifice (22) que dans la région restante de l'orifice (22).

6. Ailette (20) selon la revendication 5, dans laquelle :
- chaque bord longitudinal (26) présente une portion concave (30), vu de l'intérieur de l'orifice (22), séparant les deux portions convexes (28) et dans laquelle
- le collet (32) bordant un orifice (22) associé présente un rayon de courbure maximal (R2) au niveau de la portion concave (30) de chaque bord longitudinal (26) de l'orifice (22).

7. Echangeur thermique (1) à assemblage mécanique, notamment pour véhicule automobile, comprenant au moins un tube (10) et au moins une ailette (20) conforme à l'une quelconque des revendications précédentes et destinée à être traversée par ledit au moins un tube (10).

8. Echangeur thermique (1) selon la revendication précédente, dans lequel ladite au moins une ailette (20) présente au moins un orifice (22) de forme complémentaire de la forme dudit au moins un tube (10) et dont les dimensions sont supérieures aux dimensions de la section transversale du tube (10) le traversant.

9. Echangeur thermique (1) selon l'une des revendications 7 ou 8, dans lequel :
- ledit au moins un tube (10) présente une section transversale de largeur (l_{Tube}) variable, et dans lequel
- le collet (32) bordant un orifice (22) associé de l'ailette (20) traversé par un tube (10), présente un rayon de courbure minimal (R1) dans une zone de l'orifice (22) recevant une partie moins large du tube (10) et présente un rayon de courbure maximal (R2) dans une zone de l'orifice (22) recevant une partie plus large du tube (10).

10. Echangeur thermique (1) selon la revendication précédente, dans lequel :
- chaque tube (10) présente une section transversale comportant deux flancs longitudinaux (12) opposés, chaque flanc longitudinal (12) présentant au moins deux portions concaves (14), vu de l'extérieur du tube (10),
- les portions convexes des ailettes (28) sont complémentaires des portions concaves (14) du tube (10) traversant l'orifice (22) associé.

11. Echangeur thermique (1) selon la revendication précédente, dans lequel :
- chaque flanc longitudinal (12) d'un tube (10) présente une portion convexe (18), vu de l'extérieur du tube (10), séparant deux portions concaves (14),
- chaque bord longitudinal (26) d'un orifice (22) présente une portion concave (30), vu de l'intérieur de l'orifice (22), séparant deux portions convexes (28), et complémentaire de la portion convexe (18) du tube (10) traversant l'orifice (22), et dans lequel
- le collet (32) bordant un orifice (22) associé présente un rayon de courbure maximal (R2) au niveau de la portion concave (30) de chaque bord longitudinal (26) de l'orifice (22).

## Patentansprüche

1. Rippe (20) eines Wärmetauschers (1), insbesondere für ein Kraftfahrzeug, welche wenigstens eine Öffnung (22) von im Wesentlichen längsgerichteter Form aufweist, die dazu bestimmt ist, von einem Rohr (10) des Wärmetauschers durchquert zu werden, wobei die wenigstens eine Öffnung (22) von einem Bund (32) umgeben ist, der stoffschlüssig mit der Rippe (20) verbunden ist,
**dadurch gekennzeichnet, dass**:
- der Bund (32) mit einer Form hergestellt ist, die im Wesentlichen bezüglich der durch die Rippe (20) definierten allgemeinen Ebene gekrümmt ist, so dass sie einen Krümmungsradius (R1, R2) zwischen der durch die Rippe (20) definierten allgemeinen Ebene und dem höchsten Punkt des bezüglich der durch die Rippe (20) definierten allgemeinen Ebene vorstehenden Bundes (32) aufweist, und dadurch, dass
- der Krümmungsradius des Bundes (32) an den Enden der zugehörigen Öffnung (22) minimal (R1) und in einem im Wesentlichen mittleren Bereich entlang der Längsachse der zugehörigen Öffnung (22) maximal (R2) ist;
- jede Öffnung (22) eine im Wesentlichen längliche Form aufweist, die zwei einander gegenüberliegende Längsränder (26) aufweist, wobei jeder Längsrand (26) wenigstens zwei, vom Inneren der Öffnung (22) aus gesehen, konvexe Abschnitte (28) aufweist, und wobei
- der Bund (32), der eine zugehörige Öffnung (22) umgibt, einen minimalen Krümmungsradius (R1) an den konvexen Abschnitten (28) jedes Längsrandes (26) der Öffnung (22) aufweist.

2. Rippe (20) nach dem vorhergehenden Anspruch, wobei der minimale Krümmungsradius (R1) kleiner oder gleich 0,05 mm ist und der maximale Krümmungsradius (R2) größer oder gleich 0,15 mm ist und vorzugsweise etwa 0,22 mm beträgt.

3. Rippe (20) nach dem vorhergehenden Anspruch, wobei der maximale Radius (R2) des Bundes (32) kleiner als die Höhe (h) des Bundes (32) ist und zum Beispiel etwa 0,3 mm beträgt.

4. Rippe (20) nach einem der vorhergehenden Ansprüche, wobei:
- jede Öffnung (22) eine Form mit variabler Breite (1) aufweist, und
- der Bund (32), der eine zugehörige Öffnung (22) umgibt, einen minimalen Krümmungsradius (R1) in wenigstens einem Bereich der Öffnung (22) von geringerer Breite (lₘᵢₙ) aufweist.

5. Rippe (20) nach einem der vorhergehenden Ansprüche, wobei jede Öffnung (22) im Wesentlichen in der Mitte der größeren Länge der Öffnung (22) breiter ist (lₘₐₓ) als im übrigen Bereich der Öffnung (22).

6. Rippe (20) nach Anspruch 5, wobei:
- jeder Längsrand (26) einen, vom Inneren der Öffnung (22) aus gesehen, konkaven Abschnitt (30) aufweist, der die zwei konvexen Abschnitte (28) trennt, und wobei
- der Bund (32), der eine zugehörige Öffnung (22) umgibt, einen maximalen Krümmungsradius (R2) an dem konkaven Abschnitt (30) jedes Längsrandes (26) der Öffnung (22) aufweist.

7. Mechanisch zusammengebauter Wärmetauscher (1), insbesondere für ein Kraftfahrzeug, welcher wenigstens ein Rohr (10) und wenigstens eine Rippe (20) gemäß wenigstens einem der vorhergehenden Ansprüche, die dazu bestimmt ist, von dem wenigstens einen Rohr (10) durchquert zu werden, umfasst.

8. Wärmetauscher (1) nach dem vorhergehenden Anspruch, wobei die wenigstens eine Rippe (20) wenigstens eine Öffnung (22) von einer Form, die zur Form des wenigstens einen Rohres (10) komplementär ist und deren Abmessungen größer als die Abmessungen des Querschnitts des sie durchquerenden Rohres (10) sind, umfasst.

9. Wärmetauscher (1) nach einem der Ansprüche 7 oder 8, wobei:
- das wenigstens eine Rohr (10) einen Querschnitt mit variabler Breite (l_{Tube}) aufweist, und wobei
- der Bund (32), der eine von einem Rohr (10) durchquerte zugehörige Öffnung (22) der Rippe (20) umgibt, einen minimalen Krümmungsradius (R1) in einer Zone der Öffnung (22) aufweist, die einen weniger breiten Teil des Rohres (10) aufnimmt, und einen maximalen Krümmungsradius (R2) in einer Zone der Öffnung (22) aufweist, die einen breiteren Teil des Rohres (10) aufnimmt.

10. Wärmetauscher (1) nach dem vorhergehenden Anspruch, wobei:
- jedes Rohr (10) einen Querschnitt mit zwei einander gegenüberliegenden Längsseiten (12) aufweist, wobei jede Längsseite (12) wenigstens zwei, von der Außenseite des Rohres (10) gesehen, konkave Abschnitte (14) aufweist,
- die konvexen Abschnitte der Rippen (28) komplementär zu den konkaven Abschnitten (14) des Rohres (10) sind, das die betreffende Öffnung (22) durchquert.

11. Wärmetauscher (1) nach dem vorhergehenden Anspruch, wobei:
- jede Längsseite (12) eines Rohres (10) einen, von der Außenseite des Rohres (10) gesehen, konvexen Abschnitt (18) aufweist, der zwei konkave Abschnitte (14) trennt,
- jeder Längsrand (26) einer Öffnung (22) einen, vom Inneren der Öffnung (22) aus gesehen, konkaven Abschnitt (30) aufweist, der zwei konvexe Abschnitte (28) trennt und zu dem konvexen Abschnitt (18) des Rohres (10), das die Öffnung (22) durchquert, komplementär ist, und wobei
- der Bund (32), der eine zugehörige Öffnung (22) umgibt, einen maximalen Krümmungsradius (R2) am konkaven Abschnitt (30) jedes Längsrandes (26) der Öffnung (22) aufweist.

## Claims

1. Fin (20) of a heat exchanger (1), notably for a motor vehicle, comprising at least one orifice (22) of substantially longitudinal shape, intended to have passing through it a tube (10) of the heat exchanger, said at least one orifice (22) being bordered by a flange (32) formed as an integral part of the fin (20), **characterized in that**:
- the flange (32) is produced with a shape substantially curved with respect to the general plane defined by the fin (20), such that it has a radius of curvature (R1, R2) between the general plane defined by the fin (20) and the top of the flange (32) projecting from the general plane defined by the fin (20), and **in that**
- the radius of curvature of the flange (32) is at a minimum (R1) at the ends of the associated orifice (22) and at a maximum (R2) in a substantially central region along the longitudinal axis of the associated orifice (22);
- each orifice (22) is substantially oblong in shape, comprising two opposing longitudinal edges (26), each longitudinal edge (26) having at least two convex portions (28), as viewed from inside the orifice (22), and in which
- the flange (32) bordering an associated orifice (22) has a minimum radius of curvature (R1) at the convex portions (28) of each longitudinal edge (26) of the orifice (22).

2. Fin (20) according to the preceding claim, in which the minimum radius (R1) is less than or equal to 0.05mm and the maximum radius of curvature (R2) is greater than or equal to 0.15mm, and preferably of the order of 0.22mm.

3. Fin (20) according the preceding claim, in which the maximum radius of curvature (R2) of the flange (32) is less than the height (h) of the flange (32), for example of the order of 0.3mm.

4. Fin (20) according to any one of the preceding claims, in which:
- the shape of each orifice (22) is variable in width (1), and
- the flange (32) bordering an associated orifice (22) has a minimum radius of curvature (R1) in at least one region of the orifice (22) with a smaller width (lₘᵢₙ).

5. Fin (20) according to any one of the preceding claims, in which each orifice (22) is wider (lₘₐₓ) substantially in the middle of the largest length of the orifice (22) than in the remaining region of the orifice (22).

6. Fin (20) according to Claim 5, in which:
- each longitudinal edge (26) has a concave portion (30), as viewed from inside the orifice (22), separating the two convex portions (28) and in which
- the flange (32) bordering an associated orifice (22) has a maximum radius of curvature (R2) at the concave portion (30) of each longitudinal edge (26) of the orifice (22).

7. Mechanically assembled heat exchanger (1), notably for a motor vehicle, comprising at least one tube (10) and at least one fin (20) according to any one of the preceding claims and intended to have passing through it said at least one tube (10).

8. Heat exchanger (1) according to the preceding claim, in which said at least one fin (20) has at least one orifice (22), the shape of which matches the shape of said at least one tube (10) and the dimensions of which are larger than the dimensions of the cross section of the tube (10) passing through it.

9. Heat exchanger (1) according to one of Claims 7 or 8, in which:
- said at least one tube (10) has a cross section of which the width (l_{Tube}) varies, and in which
- the flange (32) bordering an associated orifice (22) of the fin (20) through which a tube (10) passes, has a minimum radius of curvature (R1) in an area of the orifice (22) receiving a narrower portion of the tube (10) and has a maximum radius of curvature (R2) in an area of the orifice (22) receiving a wider portion of the tube (10).

10. Heat exchanger (1) according to the preceding claim, in which:
- each tube (10) has a cross section comprising two opposing longitudinal flanks (12), each longitudinal flank (12) having at least two concave portions (14), as viewed from outside the tube (10),
- the convex portions of the fins (28) match the concave portions (14) of the tube (10) passing through the associated orifice (22).

11. Heat exchanger (1) according to the preceding claim, in which:
- each longitudinal flank (12) of a tube (10) has a convex portion (18), as viewed from outside the tube (10), separating two concave portions (14),
- each longitudinal edge (26) of an orifice (22) has a concave portion (30), as viewed from inside the orifice (22), separating two convex portions (28), and matching the convex portion (18) of the tube (10) passing through the orifice (22), and in which
- the flange (32) bordering an associated orifice (22) has a maximum radius of curvature (R2) at the concave portion (30) of each longitudinal edge (26) of the orifice (22).
